# EUROPÄISCHE PATENTSCHRIFT

(11) **EP 1 031 078 B1**
(45) Veröffentlichungstag und Bekanntmachung des Hinweises auf die Patenterteilung: **28.05.2003**
(21) Anmeldenummer: 98962243.6
(22) Anmeldetag: 11.11.1998
(51) Int. Cl.: G06F 9/445

(54) **VERFAHREN ZUM LADEN EINES PROGRAMMS**
METHOD FOR LOADING A PROGRAM
PROCEDE DE CHARGEMENT D'UN PROGRAMME

(30) Priorität: 14.11.1997 DE 19750365
(43) Veröffentlichungstag der Anmeldung: 30.08.2000
(73) Patentinhaber: ROBERT BOSCH GMBH, 70442 Stuttgart (DE)
(72) Erfinder: RODE, Detlef, D-30966 Hemingen (DE); ELKE, Dietmar, D-31139 Hildesheim (DE); STAUTZ, Wolfgang, D-31141 Hildesheim (DE); ZURMUEHL, Uwe, D-31180 Giesen (DE)
(86) Internationale Anmeldenummer: DE9803293
(87) Internationale Veröffentlichungsnummer: WO99026166

(56) Entgegenhaltungen:
- EP-A- 0 489 204
- EP-A- 0 710 914
- EP-A- 0 793 166
- EP-A- 0 803 812
- DE-A- 4 214 184

## Beschreibung

Die Erfindung betrifft ein Verfahren zum Laden eines Programms in ein an ein Kommunikationsnetzwerk angeschlossenes Gerät, das mit einem Betriebssystem und begrenzten Anwendungsprogrammen zur Ausführung spezieller Funktionen ausgestattet ist.

Die Erfindung betrifft ferner ein Datenverarbeitungsgerät, das an ein Kommunikationsnetzwerk anschließbar ist und mit einem Betriebssystem und mit begrenzten Anwendungsprogrammen zur Ausführung spezieller Funktionen ausgestattet ist.

Die Erfindung befaßt sich mit Datenverarbeitungsgeräten, die nicht als Universalrechner konzipiert sind sondern als ein Gerät für Spezialaufgaben, für die das Gerät entsprechend programmiert ist.

Ein bevorzugtes Beispiel eines derartigen Datenverarbeitungsgeräts ist das Bedienteil eines Fahrerinformationssystems in einem Kraftfahrzeug. Dieses Bedienteil kann Anzeige- und Bedienelemente für eine Vielzahl von im Kraftfahrzeug verwendbaren Gerätekomponenten enthalten, beispielsweise für einen AM/FM-Tuner mit Kassetten- und/oder CD-Laufwerk, ein Kraftfahrzeug-Navigationssystem, einen Reiserechner (Bordcomputer), ein Mobiltelefon, ein Modem zur Datenübertragung, einen CD-Wechsler und ein Femsehempfangsteil.

Das entsprechende Bedienteil enthält einen oder mehrere Prozessoren, deren Programme in wiederbeschreibbaren und nichtflüchtigen Halbleiter-Programmspeichern (z.B. Flash-EPROMs) abgelegt sind.

Das Laden der Programme findet herstellerseitig mit einem über eine Punkt-Zu-Punkt-Verbindung angeschlossenen Service-Rechner über eine spezielle Download-Schnittstelle statt. Diese Download-Schnittstelle ist nach der Auslieferung des Geräts oft nicht mehr verfügbar bzw. nicht zugänglich. Erscheinen aktualisierte Versionen der geladenen Programme, ist es erforderlich, das entsprechende Datenverarbeitungsgerät zu einer Servicestelle zu bringen, um nach Öffnen des Gerätes über einen Service-Rechner das aktualisierte Programm in das Gerät zu laden. Das Laden eines aktualisierten Programmes ist daher mit einigem Aufwand verbunden.

Es ist grundsätzlich bekannt, Programme auch über ein Kommunikationsnetzwerk in den Massenspeicher eines PC zu kopieren, beispielsweise aus dem Internet. Dabei handelt es sich um einen isolierten Vorgang., der weder das Betriebssystem noch andere Anwendungsprogramme des PC berührt. Allenfalls können Anpassungen des Betriebssystems durch das kopierte Programm bei dessen Aufruf bewirkt werden.

Weiterhin offenbart DE-A-42 14 184 ein Computersystem mit einem Flash-Speicher, ein Teil dessen Inhalt ersetzt, geändert oder umprogrammiert werden kann. Der Flash-Speicher ist dabei in mehrere Blöcke unterteilt, von denen einer elektronisch sperrbar ist, um ein Löschen oder Verändern des einmal installierten Inhalts zu verhindern. Im Gegensatz zu einem Flash-Speicher, dessen Inhalt nur als Ganzes gelöscht und neu beschrieben werden kann, ermöglicht die gewählte Speicherkonfiguration die Aktualisierung eines ausgewählten Speicherbereichs, ohne dabei den geschützten Speicherbereich zu beeinflussen. Für den Fall, daß die Umprogrammierung des genannten Flash-Speicherteils fehlschlägt, ist ein Wiederherstellungsmodus mittels eines Ersatzbetriebssystems vorgesehen, das in dem schreibgeschützten Flash-Speicherbereich zu diesem Zweck gespeichert ist. Zum Auslösen des Wiederherstellungsmodus ist ein Benutzereingriff in das Gerät zum Umstecken einer Steckverbindung vorgesehen.

Schließlich offenbart EP-A-0 803 812, eine in einem ersten Flash-Speicherbereich gespeicherte aktuelle Version eines BIOS in einen zweiten Flash-Speicherbereich zu kopieren, bevor der erste Flash-Speicherbereich durch ein neues BIOS aktualisiert wird. Es ist dabei vorgesehen, daß im Zuge der Flash-Speicher-Aktualisierung nicht der Inhalt des gesamten Flash-Speichers gelöscht und neu beschrieben wird. Vielmehr wird nur ein Teil des Flash-Speichers aktualisiert, während ein zweiter schreibgeschützter Bereich ein Reserve-BIOS bevorratet.

Die vorliegender Erfindung geht von der Problemstellung aus, das Laden eines Programms in ein Datenverarbeitungsgerät für spezielle Funktionen zu erleichtern.

Zur Lösung dieses Problems wird ein Verfahren mit den Merkmalen des unabhängigen -Patentanspruchs 1 vorgeschlagen.

Das Datenverarbeitungsgerät der eingangs erwähnten Art ist so ausgestattet, daß alle Betriebs-, Anwendungs- und Ladeprogramme in einen nichtflüchtigen Programmspeicher des Geräts ladbar sind und daß die Ladeprogramme für das Laden bestimmter neuer Programme in den Programmspeicher über das Kommunikationsnetzwerk ein vollständiges Löschen wenigstens aller Betriebs- und Anwendungsprogramme und anschließendes Laden der entsprechenden neuen Betriebs- und Anwendungsprogramme erfordern.

Das Herunterladen neuer Programme findet erfindungsgemäß somit über das Kommunikationsnetzwerk statt, an das das Gerät angeschlossen ist. Dabei ist allerdings ein unkompliziertes Herunterladen auf einen Massenspeicher (Festplatte) eines PC nicht möglich, da das Gerät regelmäßig nicht über eine Festplatte verfügt. Die Lösung der Organisationsprobleme beim Herunterladen neuer Programme in einen nichtflüchtigen Halbleiter-Programmspeicher erfolgt erfindungsgemäß dadurch, daß beim Laden zumindest essentieller Programme alle Betriebs- und Anwendungsprogramme gelöscht und neu geladen werden. Das Laden einer neuen bzw. zusätzlichen Version eines Anwendungsprogrammes geschieht daher nach dem Löschen der bisherigen Betriebsund Anwendungsprogramme und gleichzeitig mit den zugehörigen Versionen des Betriebsprogramms und der anderen Anwendungsprogramme. Dadurch ist sichergestellt, daß immer nur zueinander passende Versionen der Betriebs- und Anwendungsprogramme geladen werden, so daß sich der Ladevorgang stark vereinfacht und über das Kommunikationsnetzwerk erfolgen kann. Die im nichtflüchtigen Halbleiter-Programmspeicher geladenen Ladeprogramme können im allgemeinen unverändert bleiben und stellen dann einen nicht variierenden Teil des Programmspeichers dar. Das Laden essentieller neuer Programme gemäß der Erfindung bewirkt ein Löschen des kompletten variierenden Teils des Programmspeichers und Neuladen mit allen Betriebs- und Anwendungsprogrammen des Geräts.

Es ist gemäß der Erfindung allerdings auch möglich, auch die Ladeprogramme, neu zu laden, also den Programmspeicher zu 100 % zu leeren, bevor er mit allen Betriebs-, Anwendungs- und Ladeprogrammen neu geladen wird.

Erfindungsgemäß kann vorgesehen sein, daß vor dem Löschen der Programme im Programmspeicher und Abspeichern der entsprechenden neuen Programme eine Überprüfung der Aktualität des Gespeicherten und der neuen Programme vorgenommen wird. Dabei ist es zweckmäßig, eine Sicherheitsroutine für den Fall vorzusehen, daß statt eines aktuelleren Programms ein älteres Programm neu zu laden ist. Auf diese Weise wird verhindert, daß versehentlich statt eines aktuelleren Programms ein älteres Programm geladen wird. Selbstverständlich ist es möglich, gewollt eine ältere Programmversion zu laden.

Da bei dem erfindungsgemäßen Laden des Geräts die vollständige Funktionsfähigkeit des Gerätes von den neu geladenen Programmen abhängt, ist es sinnvoll, vor dem Laden der neuen Programme diese auf ihre physikalische Fehlerfreiheit zu überprüfen.

Der Fortschritt des Ladevorganges kann in einem Display angezeigt werden, um ein versehentliches Unterbrechen des Ladevorganges zu verhindern.

Das Laden der Programme wird von einem Lade-Server erfolgen, der regelmäßig eine Vielzahl von Programmen zum Herunterladen bereithält. Um auf das betroffene Gerät nur solche Programme zu laden, die für das Gerät sinnvoll sind, aber auch die Vollständigkeit der herunterzuladenden Programme zu gewährleisten, ist es sinnvoll, zum Laden der Programme eine Identifikation des Gerätes zu übermitteln, durch die die für das Gerät geeigneten Programme für den Ladevorgang ausgewählt werden.

Die Identifikation des Geräts hat ferner den Vorteil, beim Herunterladen von Programmen aus einem Kommunikationsnetzwerk, zu dem zahlreiche Benutzer Zutritt haben, die Berechtigung für das Herunterladen des Programmes zu überprüfen.

Das erfindungsgemäße Herunterladen der Programme kann in einem geschlossenen lokalen Netz erfolgen, indem die Programmversionen beispielsweise über eine CD-ROM in das lokale Kommunikationsnetzwerk einspeisbar sind. Ein solches lokales Netz ist beispielsweise das Kommunikationsnetzwerk in einem Kraftfahrzeug. Das Laden der Programme kann jedoch auch über ein offenes Kommunikationsnetzwerk erfolgen, zu dem zahlreiche Benutzer über Codierungen Zutritt haben. Ein solches Kommunikationsnetzwerk ist beispielsweise das Mobilfunknetz, zu dem ein auch in einem Kraftfahrzeug angeordnetes Datenverarbeitungsgerät Zugang haben kann.

Die Erfindung soll im folgenden anhand von in der Zeichnung dargestellten Ausführungsbeispielen näher erläutert werden. Es zeigen:
- Figur 1 -: eine schematische Darstellung des Anschlusses eines zu ladenden Gerätes und eines Lade-Servers an einen Bus eines Kommunikationsnetzwerks
- Figur 2 -: eine schematische Darstellung der Architektur eines Halbleiter-Programmspeichers des Datenverarbeitungsgeräts
- Figur 3 -: ein Ausführungsbeispiel für einen Ladevorgang in einem lokalen Netzwerk
- Figur 4 -: eine schematische Darstellung des Ladevorganges, bei dem der Halbleiter-Programmspeicher zu 100 % gelöscht und neu geladen wird.

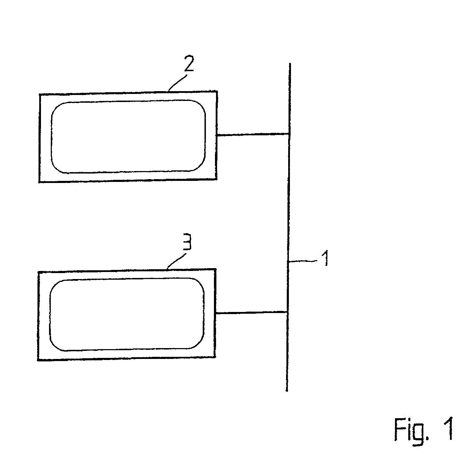

Gemäß Figur 1 ist an einen Bus 1 eines Kommunikationsnetzwerks ein mit einem neuen Programm zu ladendes Gerät 2 angeschlossen. Der Ladevorgang der Programme erfolgt von einem Ladeserver 3, der ebenfalls an den Bus 1 angeschlossen ist.

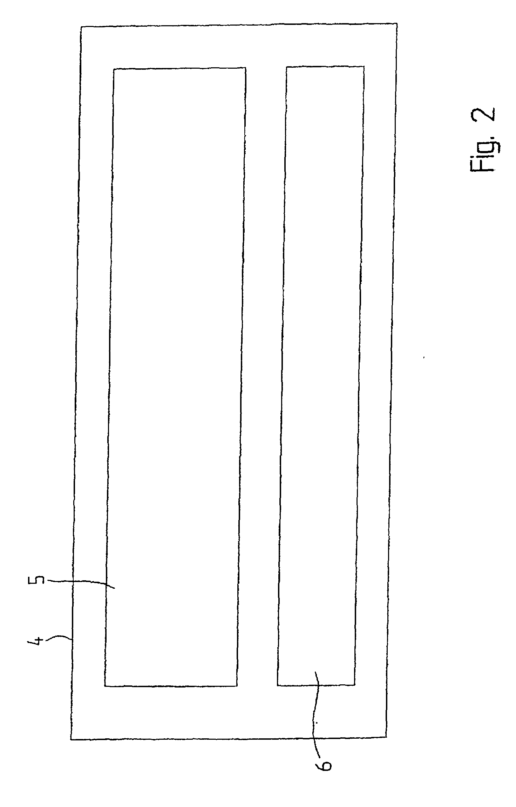

Die Programme des Geräts 2 sind in einem wiederbeschreibbaren und nichtflüchtigen Halbleiter-Programmspeicher 4 abgelegt, dessen grundsätzliche Architektur in Figur 2 dargestellt ist. Ein ganz überwiegender Teil 5 des Programmspeichers 4 enthält Betriebs- und Anwendungsprogramme einschließlich der hierfür benötigten Daten und stellt den variablen Teil des Programmspeichers dar. Ein wesentlich kleinerer Teil 6 des Programmspeichers 4 enthält die Ladeprogramme, die für das Herunterladen von Programmen über ein Kommunikationsnetzwerk erforderlich sind und besteht im wesentlichen aus einem Kommunikationstreiber, einem Programm für die für den Ladevorgang benötigte Bedienoberfläche auf einem Display und Programmierroutinen für den Programmspeicher 4, der vorzugsweise als Flash-EPROM ausgebildet ist.

Der Speicherplatz für den festen Teil 6 des Programmspeichers 4 beträgt weniger als 5 % des gesamten Speicherinhalts des Programmspeichers 4.

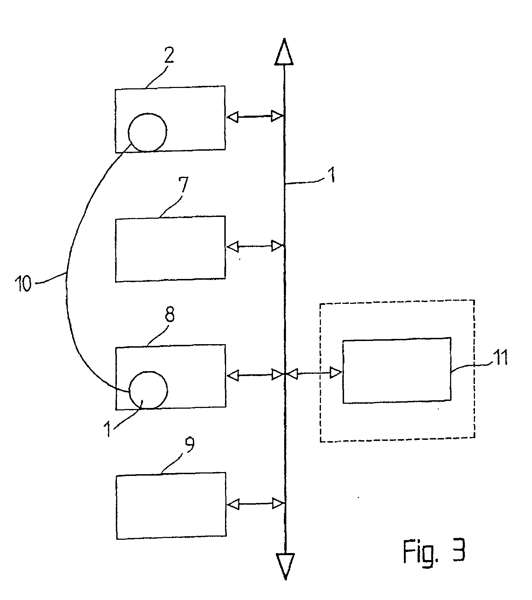

Figur 3 zeigt ein Ausführungsbeispiel eines lokalen Netzwerks in einem Kraftfahrzeug, in dem an den Bus 1 ein Bedienteil 2 für eine Mehrzahl von Komponenten als das zu ladende Gerät angeschlossen ist. Das Bedienteil 2 steuert über den Bus 1 die Funktionen eines CD-Wechslers 7 eines Navigationssystems 8 und eines Mobilfunk-Telefons 9.

Da das Navigationssystem 8 regelmäßig über ein CD-ROM-Laufwerk verfügt, wird es in dem dargestellten Ausführungsbeispiel als Lade-Server 1 genutzt. Hierzu wird die eine elektronische Landkarte enthaltende CD-ROM des Navigationssystems 8 entfernt und eine Lade-CD-ROM eingelegt, auf der die aktuellen Programmversionen für das Gerät 2 gespeichert sind. Das Herunterladen erfolgt über den Bus 1 zum Gerät 2 und die in dem Programmspeicher 4 des Geräts 2 enthaltene Ladeprogramme, so daß eine logische Verbindung zwischen dem als Ladeserver 1 fungierenden Navigationssystems 8 und dem Gerät 2 hergestellt ist, die durch die eingezeichnete Linie 10 verdeutlicht, physikalisch jedoch über den Bus 1 hergestellt ist.

Für den Fall, daß ein Navigationssystem 8 nicht vorhanden ist oder als Ladeserver nicht benutzt werden soll, kann an den Bus 1 ein tragbarer PC 11 angeschlossen werden, aus dem die Programme für das Gerät 2 heruntergeladen werden.

Der Ladevorgang kann vorzugsweise auf einem Display des Bedienteils 2 verfolgt werden.

Bei Betätigung einer geeigneten Tastenkombination des Bedienteils 2 können beispielsweise auf dem Display folgende Angaben erscheinen

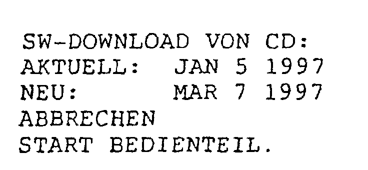

Voraussetzung für diese Angabe ist die Aktivierung des Download-Programms und das Einlegen einer Lade-CD-ROM in das Navigationssystem 8 bzw. in den PC 11. Ist keine CD-ROM eingelegt, erscheint in der Zeile "NEU:" die Angabe "KEINE" bzw. "FALSCHE CD".

Die Display-Darstellung dient als Abfrage, ob der Ladevorgang nunmehr gestartet werden soll. Es ist erkennbar, daß das Ladeprogramm die Erkennung der Versionen der Programme in dem Programmspeicher 4 ("AKTUELL") und auf der eingelegten CD-ROM ("NEU") ermöglicht.

Zum Einspielen der neuen Version der Programme für das Bedienteil wird das Laden gestartet, woraufhin im Display die nachstehende Anzeige erscheint:

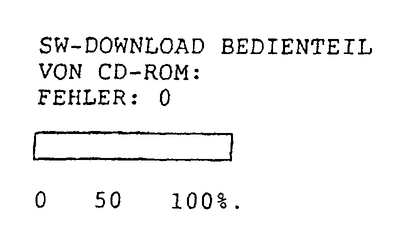

In dem Balken zwischen 0 und 100 % erfolgt eine Anzeige über den Fortschritt des Ladevorgangs.

Im allgemeinen wird es ausreichend sein, nur den variablen Teil 5 des Programmspeichers zu löschen und neu zu laden.

In Einzelfällen kann es jedoch auch sinnvoll sein, die Ladeprogramme neu zu laden.

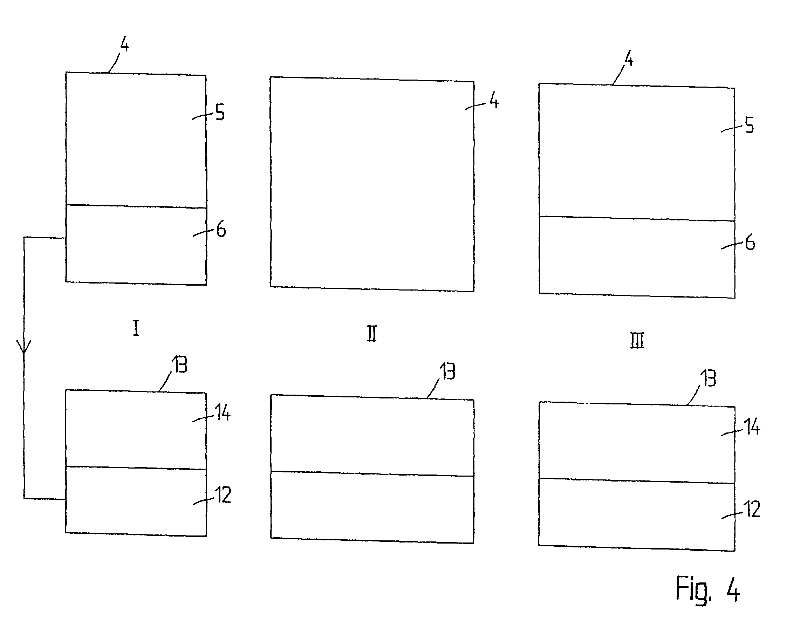

Anhand der Figur 4 werden die drei Schritte I, II und III für das komplette Löschen und Laden des Programmspeichers 4 schematisch verdeutlicht.

Dargestellt ist der Programmspeicher 4 mit seinen Teilen 5, 6, wobei der Teil 6 die Ladeprogramme enthält. Diese werden im ersten Schritt I in einen Bereich 12 eines flüchtigen Arbeitsspeichers 13 geladen, dessen weiterer Bereich 14 im allgemeinen mit Daten belegt ist.

Nach dem Kopieren der Ladeprogramme aus dem Bereich 6 des Programmspeichers 4 in dem Bereich 12 des Arbeitsspeichers 13 wird der Programmspeicher 4 in dem Schritt II vollständig gelöscht. Der Inhalt des Arbeitsspeichers 13 bleibt dabei gegenüber dem Schritt I unverändert, enthält also eine Kopie der Ladeprogramme 6 in der vorher im Programmspeicher 4 abgespeicherten Version.

Im Schritt III wird nun der Programmspeicher 4 mit neuen Betriebs- und Anwendungsprogrammen in dem Teil 5 und mit neuen Ladeprogrammen in dem Teil 6 geladen. Nachdem dies ohne Fehlermeldung erfolgt ist, wird das alte Ladeprogramm im Bereich 12 des Arbeitsspeichers 13 gelöscht.

Am Ende der beschriebenen Schritte enthält der Programmspeicher 4 Anwendungs- und Betriebsprogramme sowie Ladeprogramme in der neuen Version.

Das erfindungsgemäße Laden von neuen Programmversionen über das Kommunikationsnetzwerk erlaubt für den Ladevorgang die Verwendung der für das Kommunikationsnetzwerk vorhandenen Schnittstellen, so daß für den Ladevorgang keine Sonder-Schnittstellen belegt werden müssen. Selbstverständlich sorgen die verwendeten Ladeprogramme dafür, daß Programmteile nicht fälschlich überschrieben werden und das neu gespeicherte Programm auf seine Integrität hin überprüft worden ist.

Der Ladevorgang über das Kommunikationsnetzwerk erfolgt selbstverständlich unter Berücksichtigung der in dem Kommunikationsnetzwerk verwendeten Datenprotokolle. Der Ladevorgang für die Programme erfolgt nur, wenn aufgrund einer neuen Programmversion auch tatsächlich ein Bedürfnis dafür besteht. Die Anforderung des Ladevorganges erfolgt somit durch den Benutzer und ist ohne aufwendiges Anfahren von Servicestellen oder Zerlegen von Geräten möglich.

Sollte während des Ladevorganges eine Störung auftreten, beispielsweise bedingt durch eine Unterspannung beim Starten des Motors oder durch eine schwache Batterie des Kraftfahrzeugs, wird der Ladevorgang beim nächsten Einschalten des Gerätes zweckmäßigerweise automatisch neu eingeleitet.

Die Erfindung schließt nicht aus, daß kleinere Datenteile, wie beispielsweise Modifizierungen von elektronischen Landkarten aufgrund von aktuellen Verkehrssituationen, beispielsweise über das Mobilfunknetz, geladen werden, ohne daß hierfür ein vollständiges Neuladen aller Programme durchgeführt wird. Das Neuladen aller Programme erfolgt jedenfalls dann, wenn grundsätzlich neue Versionen der Anwendungs- oder Betriebsprogramme benutzt werden sollen.

Selbstverständlich kann das Herunterladen der Programme auch beispielsweise über das Mobilfunknetz aus dem Internet erfolgen.

## Patentansprüche

1. Verfahren zum Laden eines Programms in ein an ein Kommunikationsnetzwerk angeschlossenes Gerät (2), das mit einem Betriebssystem und Anwendungsprogrammen zur Ausführung spezieller Funktionen des Geräts (2) ausgestattet ist, wobei Betriebs- und Anwendungsprogramme in einem nichtflüchtigen Halbleiter-Programmspeicher (4) des Geräts (2) gespeichert sind,
wobei zum Laden neuer Programme über das Kommunikationsnetzwerk die gespeicherten Betriebs- und Anwendungsprogramme gelöscht werden,
wobei in dem nichtflüchtigen Halbleiter-Programmspeicher (4) weiterhin die zum Laden der neuen Programme erforderlichen Ladeprogramme gespeichert sind,
**dadurch gekennzeichnet,**
**dass** nach Feststellung eines durch eine Störung der Stromversorgung bedingten fehlerhaften Ladevorgangs der Ladevorgang ohne Manipulation des Geräts (2) automatisch eingeleitet wird.

2. Verfahren nach Anspruch 1, **dadurch gekennzeichnet, dass** vor dem Löschen der Programme im Programmspeicher (4) und dem Abspeichern der entsprechenden neuen Programme eine Überprüfung der Aktualität der gespeicherten und der neuen Programme vorgenommen wird.

3. Verfahren nach einem der vorstehenden Ansprüche, **gekennzeichnet durch** eine Sicherheitsroutine für den Fall, dass statt des aktuelleren Programms ein älteres Programm zum Laden ansteht.

4. Verfahren nach einem der vorstehenden Ansprüche, **dadurch gekennzeichnet, dass** vor dem Laden der neuen Programme diese auf ihre Fehlerfreiheit überprüft werden.

5. Verfahren nach einem der vorstehenden Ansprüche, **dadurch gekennzeichnet, dass** der Ladefortschritt an einem Display angezeigt wird.

6. Verfahren nach einem der vorstehenden Ansprüche, **dadurch gekennzeichnet, dass** zum Laden der Programme eine Identifikation des Geräts (2) übermittelt wird, durch die die für das Gerät (2) geeigneten Programme für den Ladevorgang ausgewählt werden.

## Claims

1. Method for loading a program into an appliance (2) which is connected to a communications network and is equipped with an operating system and with application programs for performing specific functions of the appliance (2),
where the operating and application programs are stored in a non-volatile semiconductor program store (4) in the appliance (2),
where the stored operating and application programs are deleted in order to load new programs via the communications network,
where the non-volatile semiconductor program store (4) also stores the loading programs required for loading the new programs,
**characterized**
**in that**, when an incorrect loading operation caused by a fault in the power supply has been discovered, the loading operation is automatically initiated without manipulating the appliance (2).

2. Method according to Claim 1, **characterized in that**, before the programs in the program store (4) are deleted and the corresponding new programs are stored, the currentness of the stored programs and of the new programs is checked.

3. Method according to one of the preceding claims, **characterized by** a security routine for the case in which, instead of the more current program, an older program is available for loading.

4. Method according to one of the preceding claims, **characterized in that**, before the new programs are loaded, they are checked to ensure that they are free of error.

5. Method according to one of the preceding claims, **characterized in that** the loading progress is displayed on a display.

6. Method according to one of the preceding claims, **characterized in that**, to load the programs, an identification for the appliance (2) is transmitted which selects the programs suited to the appliance (2) for the loading operation.

## Revendications

1. Procédé pour charger un programme dans un appareil (2) raccordé à un réseau de communication, équipé d'un système de fonctionnement et de programmes d'application pour exécuter des fonctions spéciales de l'appareil (2),
les programmes de fonctionnement et d'application étant enregistrés dans une mémoire de programme à semi-conducteur (4), non volatile de l'appareil (2), alors que pour charger de nouveaux programmes par le réseau de communication on efface les programmes de fonctionnement et d'application enregistrés, et qu'en outre les programmes de chargement nécessaires au chargement des nouveaux programmes, sont enregistrés dans la mémoire de programme à semi-conducteur (4), non volatil,
**caractérisé en ce que**
après avoir constaté une opération de chargement erronée provoquée par un dérangement de l'alimentation électrique, l'opération de chargement est lancée automatiquement sans manipulation de l'appareil (2).

2. Procédé selon la revendication 1,
**caractérisé en ce que**
avant l'effacement des programmes dans la mémoire de programmes (4) et l'enregistrement des nouveaux programmes correspondants, on vérifie l'actualité des programmes enregistrés et des nouveaux programmes.

3. Procédé selon l'une quelconques des revendications précédentes,
**caractérisé par**
une routine de sécurité au cas où à la place du programme le plus actuel, il y a un programme ancien à charger.

4. Procédé selon l'une des revendications précédentes,
**caractérisé en ce que**
avant le chargement des nouveaux programmes, on vérifie qu'ils ne comportent pas d'erreurs.

5. Procédé selon l'une des revendications précédentes,
**caractérisé en ce que**
l'évolution du chargement est affichée sur un afficheur.

6. Procédé selon l'une des revendications précédentes,
**caractérisé en ce que**
pour charger le programme on détermine une identification de l'appareil (2) par laquelle les programmes convenant pour l'appareil (2) sont sélectionnés pour l'opération de chargement.
